(19) Europäisches Patentamt
European Patent Office
Office européen des brevets

(11) **EP 2 922 168 B1**

(12) **EUROPEAN PATENT SPECIFICATION**

(45) Date of publication and mention of the grant of the patent:
**25.07.2018 Bulletin 2018/30**

(51) Int Cl.:
*H02J 3/38* *(2006.01)*    *H02J 3/46* *(2006.01)*

(21) Application number: **15156222.0**

(22) Date of filing: **24.02.2015**

(54) **CONTROL METHOD FOR A PLURALITY OF GENERATORS AND SYSTEM**

STEUERUNGSVERFAHREN FÜR EINE VIELZAHL VON GENERATOREN UND SYSTEM

PROCÉDÉ DE COMMANDE POUR UNE PLURALITÉ DE GÉNÉRATEURS, ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2014 KR 20140031803**

(43) Date of publication of application:
**23.09.2015 Bulletin 2015/39**

(73) Proprietor: **Korea Electronics Technology Institute**
**Gyeonggi-do 463-816 (KR)**

(72) Inventors:
• **Park, Joon Sung**
**152-774 Seoul (KR)**
• **Kim, Jin Hong**
**440-734 Gyeonggi-do (KR)**
• **Choi, Jun Hyuk**
**158-809 Seoul (KR)**
• **Jung, In Sung**
**152-795 Seoul (KR)**

(74) Representative: **TBK**
**Bavariaring 4-6**
**80336 München (DE)**

(56) References cited:
**EP-A2- 2 072 813**    **WO-A2-2008/011522**
**US-A1- 2013 221 671**

## Description

### TECHNICAL FIELD

The present invention relates to a generation system of a generator, and more particularly, a generating method for a generator and a system capable of controlling power output from a plurality of generators to be constant.

### BACKGROUND

Recently, interest in generators using an alternative energy has been increased due to depletion of fossil fuels and environmental pollution.

The generators using an alternative energy refer to nuclear power generators using a nuclear energy, solar energy generators using a solar energy, wind power generators using a wind energy, tidal power generators using a tidal energy of seawater, etc.

The wind generator and the tidal generator among the above generators are generators using a synchronizer which converts torques of wind and waves serving as generation sources to an electrical energy, and more particularly, using a permanent magnet synchronizer.

Generally, the plurality of wind generators and tidal generators are provided to be generated and a speed of a generation source is continuously changed because intensity of the wind and waves is not constant.

When the speed of the generation source is continuously changed, power generated from the each generator has a difference in a size and a phase, and thus ripples are generated.

Output power generated without consideration of an amount of generation of each generator has ripples and an existing power network can be unstable when the out power is supplied to the power network.

Further, although each generator generates the same amount of generation in the same speed, ripples can be generated because the output power generated from each generator has a different phase.

To solve the above problem, in related arts, a method of outputting constant power using an energy storage device in an output terminal of the generator has been used.

However, in the case of the generator using the energy storage device, a cost is increased due to an increase in a cost of the energy storage device.

Further, in other related arts, a method of changing a blade angle based on a speed of a generation source has been used.

That is, the method of changing the blade angle can change the blade angle to less rotation when the speed is high, and change the blade angle to more rotation by the generator when the speed is low, thereby reducing the ripples.

However, the method of changing the blade angle of the generator is difficult to respond when the speed is quickly changed, thereby reliability thereof can be lowered.

Patent Literatures

Document EP 2 072 813 A2 discloses a control method for a plurality of generators and a generation system as set out in the preambles of claims 1 and 6. In particular, a control system and method for operating a wind farm are described, wherein the actual power consumption of the wind farm is determined and the power production of at least one of the wind turbines is adjusted such that the actual power production and actual power consumption are substantially equal.

Document WO 2008/011522 A2 discloses a method for designing and controlling distributed generation resources.

Document US 2013/0221671 A1 discloses a wind turbine generator system, wherein wind turbines are subdivided into two wind turbine groups which are controlled separately.

### SUMMARY

The present invention is directed to providing a generating method for a generator and a system capable of outputting power output from the generator to be constant at a low cost.

Further, the present invention is directed to providing a generating method for a generator and a system capable of responding when a speed of a generation source is quickly changed.

This object is solved by a control method for a plurality of generators as set out in claim 1, and by a generation system of a plurality of generators as set out in claim 6.

The control method for a plurality of generators as set out in claim 1 includes setting reference total power serving as a reference value, calculating a command value of current using the reference total power and a speed of a generation source sensed from each generators at every moment, and adjusting output current of each of the generators so as that total power output from each generator is close to the reference total power, using the calculated command value of current.

In the method, the reference total power is total power based on a root mean square (rms) of the speed of the generation source in a predetermined period.

In the method, the command value of current is defined by Equation below.

$$C = \frac{P_{total}}{v_1^2 + v_2^2 + 0 + v_n^2}$$

Here, C is a command value of current, each of $v_1$ to $v_n$ is a speed of the generation source at every moment, and Ptotal is reference total power.

In the method, the command value of current is a proportional constant of a force or torque of the generator and the speed of the generation source.

In the method, the adjusting of the output current controls current using the command value of current by Equation below.

$$i = \frac{C}{K_f} v \quad \text{or} \quad i = \frac{C}{K_t} w$$

Here, I is output current, C is a command value of current, $K_f$ is a proportional constant of a force and current, $K_t$ is a proportional constant of a torque and current, and v is a speed of each generation source associated to a force, and w is a speed of each generation source associated to a torque.

The generation system of a plurality of generator as set out in claim 6 includes a plurality of generators each configured to provide a sensing unit which senses a speed of a generation source and output current of each generator, a controller configured to generate a control signal to control output current of each of the generators so as that output power is close to the reference total power, by setting reference total power to be produced from the plurality of generators, calculating a command value of current using the speeds of the generation source sensed from each of the generators at every moment in the sensing unit, and using the calculated command value of current, and a current controller installed on an output terminal of each of the generator, configured to receive a control signal from the controller, and configured to control current output from the generator.

In the system, the generator is a wind power generator, a wave power generator, or a tidal power generator.

In the system, the controller includes an operation unit configured to calculate the command value of current, and a current signal generator configured to generate a control signal to control output current of each of the generator using the command value of current calculated from the operation unit.

The generating method for the generator and the system according to embodiments of the present invention can set reference total power serving as a reference value, calculate a command value of current using the reference total power and a speed sensed from each generators at every moment, and adjust output current of each of the generators so as that total power output from each generator is close to the reference total power using the calculated command value of current, thereby responding when a speed of a generation source is quickly changed.

Further, the generating method for the generator and the system according to embodiments of the present invention can set reference total power serving as a reference value, calculate a command value of current using the reference total power and a speed sensed from each generators at every moment, and adjust output current of each of the generators so as that total power output from each generator is close to the reference total power using the calculated command value of current, thereby a cost of generator can be saved because a separate device is not used to output constant power.

**BRIEF DESCRIPTION OF DRAWINGS**

FIG. 1 is a configuration of a generation system of a generator according to an embodiment of the present invention.
FIG. 2 is a configuration of a controller of the generation system of the generator according to the embodiment of the present invention.
FIG. 3 is a graph illustrating an example of speeds of generation sources input from a plurality of provided generators.
FIG. 4 shows graphs illustrating current and voltages output when speeds of generation sources shown in FIG. 3 are input.
FIG. 5 is a graph illustrating total power output by current and voltages output based on FIG. 4.
FIG. 6 shows graphs illustrating current and voltages in states in which output current is adjusted when speeds of generation sources shown in FIG. 3 are input, using the generation system of the generator according to the embodiment of the present invention.
FIG. 7 is a graph illustrating total power output by current and voltages output based on FIG. 6.
FIG. 8 is a flow chart illustrating a generating method of the generator according to the embodiment of the present invention.

**DETAILED DESCRIPTION**

Hereinafter, in the description of the present invention, when it is determined that a detailed description of the related art of the invention unnecessarily obscures the gist of the invention, the detailed description will be omitted.
Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In the drawings and specification, there have been disclosed typical exemplary embodiments of the invention, and although specific terms are employed, they are used in a generic and descriptive sense only and not for purposes of limitation. It should be understood, however, that there is no intent to limit the invention to the particular forms disclosed, but on the contrary, the invention is to cover all modifications, equivalents, and alternatives falling within the spirit and scope of the invention.
Hereinafter, a generation system 100 according to an embodiment of the present invention generator will be described with reference to accompanying drawings.

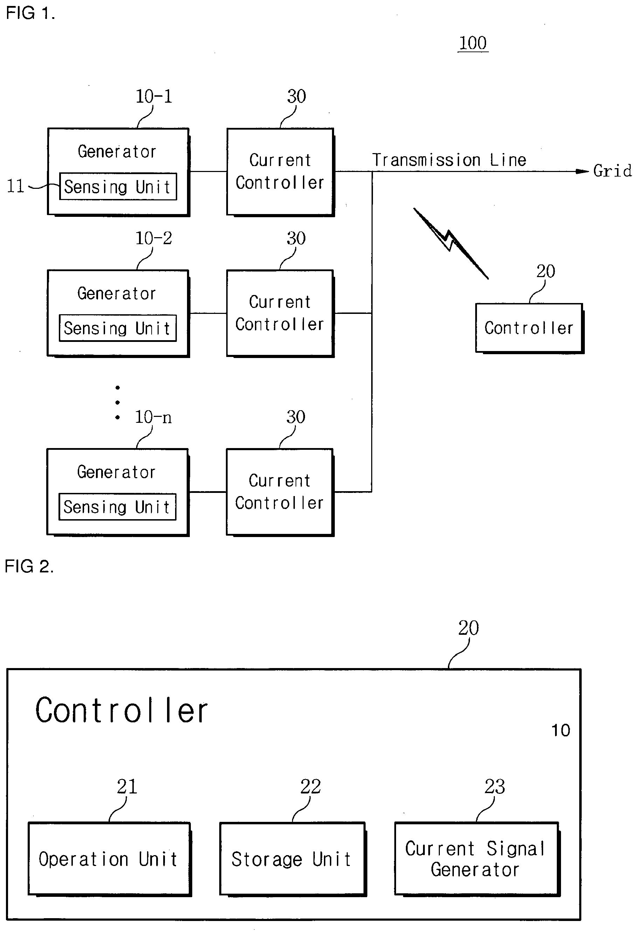

FIG. 1 is a configuration of a generation system of a generator according to an embodiment of the present invention, and FIG. 2 is a configuration of a controller of the generation system of the generator according to the embodiment of the present invention.
Referring to FIGS. 1 and 2, the generation system 100 of the generator according to the embodiment of the present invention controls total power of a plurality of provided generators 10-1 to 10-n to be constant, and transmit the constant power to a power system Grid.
Further, the generation system 100 of the generator includes a plurality of generators 10-1 to 10-n, a controller 20, and a current controller 30.
Although the plurality of provided generators 10-1 to 10-n according to the embodiment of the present invention may use a wind power generator, a wave power generator, or a tidal power generator, an example of the wind power generator will be described below.
Each of the generators 10-1 to 10-n may include a sensing unit 11 which may sense a speed and current thereof.
Speeds of generation sources may be different from each other due to the influence of topography inside a wind farm and adjacent generators 10-1 to 10-n.
Accordingly, the sensing unit 11 may be installed in each of the plurality of generators 10-1 to 10-n, sense a speed of each generation source based on a wind speed changeable at every moment, and sense current output from each generator 10-1 to 10-n according to the speed.
Here, the speed of the generation source may be a speed of a wind turbine of the generators 10-1 to 10-n.
Further, the sensing unit 11 may transmit the sensed speed and a current value to a controller 20, which will be described below, through a wireless communication. However, the transmission is not limited to the wireless communication, but the sensing unit 11 may transmit the sensed speed and the current value to the controller 20 through a wired communication.
A wide area network communication, e.g., Wibro, Wi-Fi, or Wi-Max, may be used for a wireless communication and a local area network communication, e.g., Zigbee or Bluetooth, may be used when few generators 10-1 to 10-n are installed.

The controller 20 may generate a control signal which controls power output from the generators 10-1 to 10-n so as to be constant using the speed and the current value received from the sensing unit 11.

Further, the controller 20 may include an operation unit 21, a storage unit 22, and a current signal generator 23.

The operation unit 21 may receive the speed and the current value received from the sensing unit 11 and calculate a command value of current.

The command value of current is calculated by Equation 1 below.

[Equation 1]

$$C = \frac{P_{total}}{v_1{}^2 + v_2{}^2 + 0 + v_n{}^2}$$

Here, C : a command value of current

$v_1$ to $v_n$ : a speed of each generation source at every moment

Ptotal : reference total power

By Equation 1, a command value of current can be calculated using a speed at every moment and reference total power desired to be output.

Equation 1 is induced using Equation 2, Equation 3, Equation 4, and Equation 5 below.

[Equation 2]

$$F = Cv \quad \text{or} \quad T = Cw$$

Here, F, T : a force or torque

C : a command value of current (a proportional constant)

v, w : a speed

That is, a force or torque generated from each of the generators 10-1 to 10-n is proportional to a speed of the generation source, as shown in Equation 2.

[Equation 3]

$$P = Fv \quad \text{or} \quad P = Tw$$

Here, P : output power

F, T : a force or torque

v, w : a speed

That is, output power of a generator is proportional to a force or torque generated from each of the generators 10-1 to 10-n, as shown in Equation 3.

Accordingly, Equation 4 is induced from Equation 2 and Equation 3 below.

[Equation 4]

$$P = C v^2 \quad \text{or} \quad P = C w^2$$

Here, P : output power
C : a proportional constant (a command value of current)
v, w : a speed

That is, Equation 4 is induced from Equation 2 and Equation 3. Equation 4 shows that output power is proportional to square of a speed of a generation source.

Accordingly, total power output from each of the generators 10-1 to 10-n is represented by Equation 5 below.

[Equation 5]

$$P_{total} = Cv^2{}_1 + Cv^2{}_2 + 0 + Cv^2{}_n$$

Here, Ptotal : total power (reference total power)
C : a proportional constant (a command value of current)
v : a speed

Accordingly, Equation 1 is induced from Equation 5. Equation 1 may calculate a command value of current.

Here, total power of Equation 5 may serve as reference total power of Equation 1.

The reference total power may be arbitrarily set by a manager but is not limited thereto. The reference total power may be set according to a root mean square (rms) speed in a predetermined period.

That is, total power may be obtained using average power output from the plurality of generators 10-1 to 10-n and the reference total power may be set in consideration of the total power which may be output from the generators 10-1 to 10-n.

The storage unit 22 may store a program for an operation of the generation system 100 of the generator and data based on the program operation. That is, the storage unit 22 may store an operating system (OS) or the like for an operation of the generation system of the generators 10-1 to 10-n.

Specifically, the storage unit 22 may store operation expressions used in operations of the operation unit 21 and values resulted from the operations, and transmit the values to the current signal generator 23.

The current signal generator 23 may generate a control signal for controlling output current of each of the generators 10-1 to 10-n using a command value of current calculated by the operation unit 21.

Since the command value of current is proportional to output current as shown in Equation 6 below, the current signal generator 23 may generate a control signal with respect to a current value based on the command value of current in consideration of a speed of the generator 10-1 to 10-n, and transmit the control signal to the current controller 23 installed in an output terminal of each of the generators 10-1 to 10-n.

That is, the current signal generator 23 may adjust output generated from the plurality of generators 10-1 to 10-n based on the reference total power, and control the total power value to be maintained as the reference total power value.

[Equation 6]

$$i = \frac{C}{K_f} v \quad \text{or} \quad i = \frac{C}{K_t} v$$

Here, i : output current
C : a command value of current
v : a speed of a generation source
Kf, Kt : a force or torque and a proportional constant of current

Equation 6 is induced from Equation 2 and below Equation 7.

[Equation 7]

$$F = K_f i \quad T = K_T i$$
or

Here, F, T : a force or torque
$K_f$, $K_t$ : a force or torque and a proportional constant of current
i : output current

That is, since a force or torque is proportional to current and a speed of a generation source, Equation 6 may be induced.

The current controller 30 is installed in an output terminal of each of the generators 10-1 to 10-n, receives a control signal from the current signal generator 23 of the controller 20, and may control current output from the generators 10-1 to 10-n at every moment according to the control signal.

Hereinafter, when the generation system 100 of the generator according to the embodiment of the present invention is implemented, the variation of total power according to output current will be described.

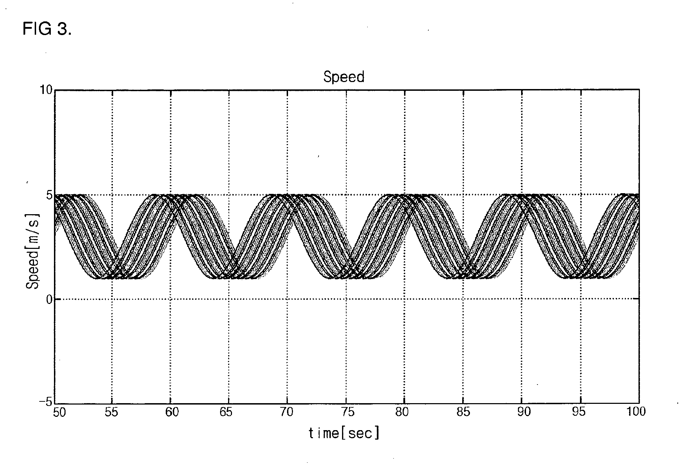

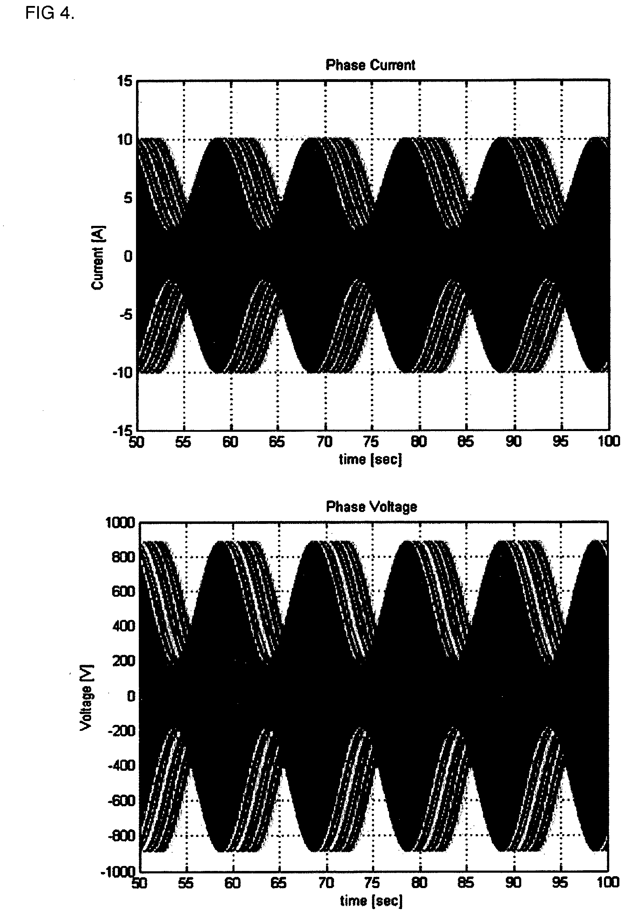

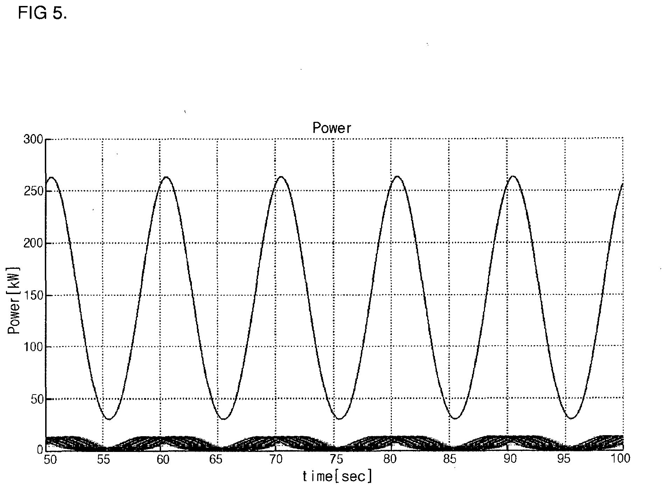

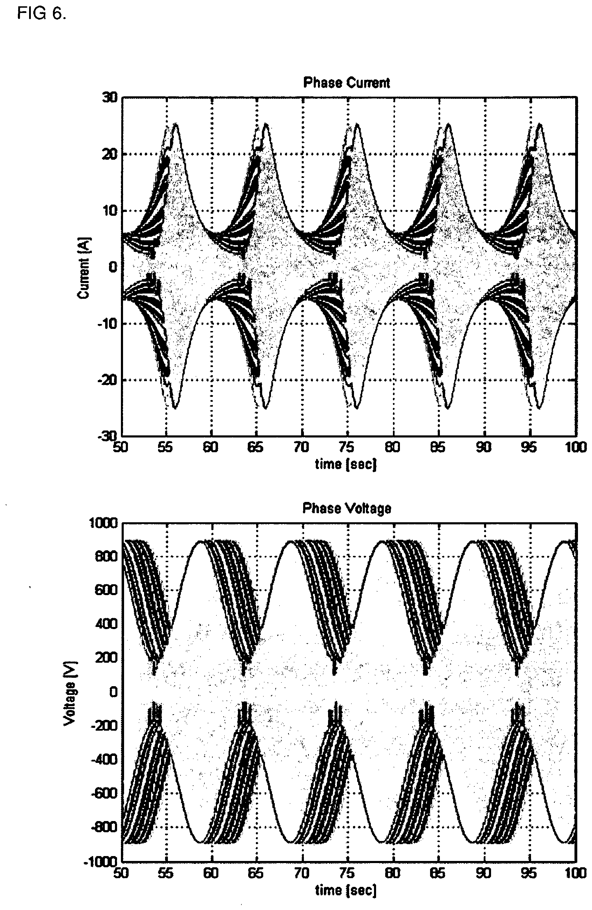

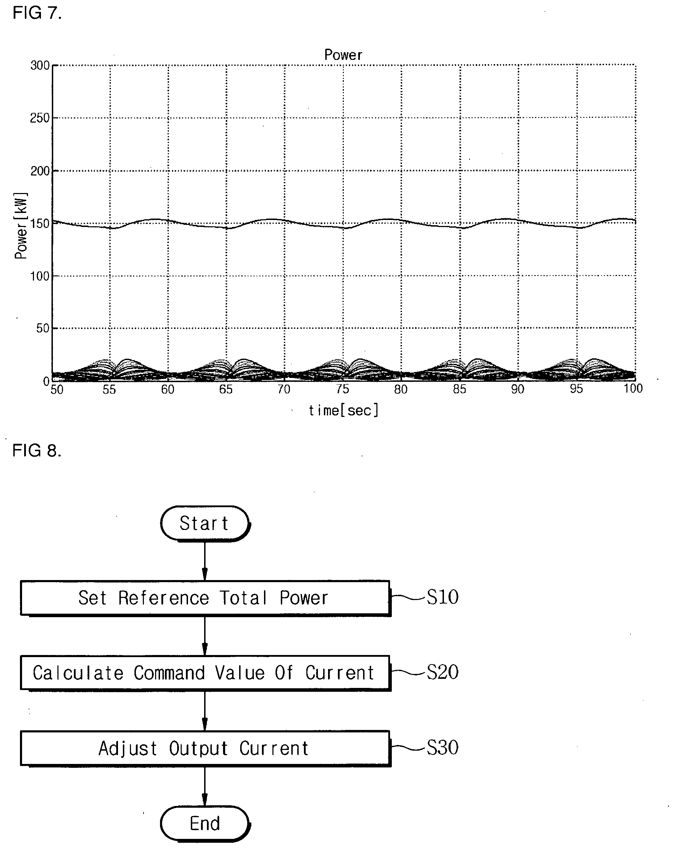

FIG. 3 is a graph illustrating an example of speeds of generation sources input from a plurality of provided generators. FIG. 4 shows graphs illustrating current and voltages output when speeds of generation sources shown in FIG. 3 are input. FIG. 5 is a graph illustrating total power output by current and voltages output based on FIG. 4. FIG. 6 shows graphs illustrating current and voltages in states in which output current is adjusted when speeds of generation sources shown in FIG. 3 are input, using the generation system of the generator according to the embodiment of the present invention. FIG. 7 is a graph illustrating total power output by current and voltages output based on FIG. 6.

Referring to FIGS. 3 to 7, when a speed of a generation source according to time is not constant as shown in FIG. 3, current and a voltage output from the generators 10-1 to 10-n are output to have ripples due to phase differences as shown in FIG. 4.

Accordingly, output total power is output as a waveform having a ripple twice greater than the speed of the generation source as shown in FIG. 5.

Meanwhile, when current output after implementation of the generation system 100 of the generator according to the embodiment of the present invention is adjusted as shown in FIG. 6, constant power may be output regardless of the speed of the generation source as shown in FIG. 7.

Accordingly, the generation system 100 of the generator according to the embodiment of the present invention estimates total power to be output, calculates a command value of current according to a speed of the generation source using the total power, and controls current of the generators 10-1 to 10-n. Thus, the generation system 100 may response even when the speed of the generation source is quickly changed.

Further, since the generation system 100 of the generator according to the embodiment of the present invention estimates total power to be output, calculates a command value of current according to a speed of the generation source using the total power, and controls current of the generators 10-1 to 10-n, a separate device is unnecessary to output constant power and a cost of the generators 10-1 to 10-n can be saved.

FIG. 8 is a flow chart illustrating a generating method of the generator according to the embodiment of the present invention.

Meanwhile, the generating method of the generators 10-1 to 10-n according to the embodiment of the present invention is a generating method using the above described generation system 100 of the generator, and descriptions the same as the above descriptions will be omitted in below descriptions.

Referring to FIG. 1 to 8, first, in S10, reference total power to be a reference value may be set.

That is, in S10, the reference total power is total power of a plurality of generators 10-1 to 10-n desired to be output and may be applied to the above described Equation 1.

Next, in S20, a command value of current may be calculated using the reference total power and a sensed speed of each of the generators 10-1 to 10-n at every moment.

That is, in S20, the command value of current may be calculated by Equation 1 using the reference total power and a speed sensed from each of the generators 10-1 to 10-n at every moment.

Next, in S30, current output from each of the generators 10-1 to 10-n are controlled so that output power is close to the reference total power using the calculated command value of current.

That is, in S30, since the current is controlled according to the command value of current changed by the speed sensed from the each of the generators 10-1 to 10-n at every moment, the current may be controlled so that the output total power is constant.

While the present invention has been described with reference to exemplary embodiments, it will be understood by those skilled in the art that various changes and modifications may be made without departing from the spirit and scope of the invention as defined by the appended claims.

Provided is a generation system of a generator which provides a generating method for a generator and a system in which power output from the generator is constantly output at a low cost and respond when a speed of a generation source is quickly changed. The present invention includes setting reference total power to be produced from a plurality of generators, calculating a command value of current using the reference total power and a speed sensed from each generators at every moment, and adjusting output current of each of the generators so as that total power output from each generator is close to the reference total power using the calculated command value of current.

**Claims**

1. A control method for a plurality of generators, comprising:

    setting (**S10**) reference total power to be produced from a plurality of generators (**10-1 to 10-n**);
    **characterized by**
    calculating (**S20**) a command value of current using the reference total power and a speed of a generation source sensed from each of the generators (**10-1 to 10-n**) at every moment; and
    adjusting (**S30**) output current of each of the generators (**10-1 to 10-n**) so as that total power output from each generator (**10-1 to 10-n**) is close to the reference total power using the calculated command value of current.

2. The method of claim 1, wherein the reference total power is total power based on a root mean square (rms) of the speed of the generation source in a predetermined period.

3. The method of claim 1 or 2, wherein the command value of current is defined by Equation below:

$$C = \frac{P_{total}}{v_1{}^2 + v_2{}^2 + \mathrm{O} + v_n{}^2}$$

wherein C is a command value of current, each of $v_1$ to $v_n$ is a speed of the generation source at every moment, and Ptotal is reference total power.

4. The method of claim 3, wherein the command value of current is a proportional constant of a force or torque of the generator (**10-1 to 10-n**) and the speed of the generation source.

5. The method of claim 4, wherein the adjusting of the output current controls current using the command value of current by Equation below:

$$i = \frac{C}{K_f}v \qquad i = \frac{C}{|K_f|}w \qquad \text{or}$$

wherein I is output current, C is a command value of current, $K_f$ is a proportional constant of a force and current, $K_t$

is a proportional constant of a torque and current, and v is a speed of each generation source associated to a force, and w is a speed of each generation source associated to a torque.

6. A generation system of a plurality of generators, comprising:

a plurality of generators (**10-1 to 10-n**) each configured to provide a sensing unit (**11**) which senses a speed of a generation source and output current of each generator (**10-1 to 10-n**);

a controller (**20**) configured to generate a control signal to control output current of each of the generators (**10-1 to 10-n**) so as that output power is close to the reference total power, by setting reference total power to be produced from the plurality of generators (**10-1 to 10-n**), calculating a command value of current using the speeds of the generation source sensed from each of the generators (**10-1 to 10-n**) at every moment in the sensing unit, and using the calculated command value of current; and

a current controller (**30**) installed on an output terminal of each of the generators (**10-1 to 10-n**), configured to receive a control signal from the controller (**20**), and configured to control current output from the generator (**10-1 to 10-n**).

7. The system of claim 6, wherein the generator (**10-1 to 10-n**) is a wind power generator, a wave power generator, or a tidal power generator.

8. The system of claim 6, wherein the controller (**20**) comprises:

an operation unit (**21**) configured to calculate the command value of current; and

a current signal generator (**23**) configured to generate a control signal to control output current of each of the generators (**10-1 to 10-n**) using the command value of current calculated from the operation unit (**21**).

**Patentansprüche**

1. Steuerungsverfahren für eine Vielzahl von Generatoren, mit:

Einstellen (**S10**) einer Referenzgesamtleistung, die von einer Vielzahl von Generatoren (**10-1 bis 10-n**) zu erzeugen ist,

**gekennzeichnet durch**

Berechnen (**S20**) eines Strombefehlswerts unter Verwendung der Referenzgesamtleistung und einer Geschwindigkeit einer Erzeugungsquelle, die von jedem der Generatoren (**10-1 bis 10-n**) zu jedem Moment erfasst wird, und

Justieren (**S30**) eines Ausgangsstroms von jedem der Generatoren (**10-1 bis 10-n**) unter Verwendung des berechneten Strombefehlswerts derart, dass die aus jedem Generator (**10-1 bis 10-n**) ausgegebene Gesamtleistung nahe an die Referenzgesamtleistung gelangt.

2. Verfahren nach Anspruch 1, wobei die Referenzgesamtleistung eine Gesamtleistung ist, die auf einem quadratischen Mittelwert (**rms**) der Geschwindigkeit der Erzeugungsquelle in einer vorbestimmten Periode beruht.

3. Verfahren nach Anspruch 1 oder 2, wobei der Strombefehlswert durch die nachstehende Gleichung definiert ist:

$$C = \frac{P_{total}}{v_1{}^2 + v_2{}^2 + 0 + v_n{}^2}$$

wobei C ein Strombefehlswert ist, $v_1$ bis $v_n$ jeweils eine Geschwindigkeit der Erzeugungsquelle zu jedem Moment ist, und Ptotal die Referenzgesamtleistung ist.

4. Verfahren nach Anspruch 3, wobei der Strombefehlswert eine Kraft- oder Drehmomentproportionalkonstante des Generators (**10-1 bis 10-n**) und der Geschwindigkeit der Erzeugungsquelle ist.

**5.** Verfahren nach Anspruch 4, wobei das Justieren des Ausgangsstroms Strom unter Verwendung des Strombefehlswerts durch die nachstehende Gleichung steuert:

$$i = \frac{C}{K_f} v \qquad \text{oder} \qquad i = \frac{C}{K_t} w$$

wobei I ein Ausgangsstrom ist, C ein Strombefehlswert ist, $K_f$ eine Proportionalkonstante einer Kraft und von Strom ist, $K_t$ eine Proportionalkonstante eines Drehmoments und von Strom ist, und v eine Geschwindigkeit jeder Erzeugungsquelle ist, die mit einer Kraft verknüpft ist, und w eine Geschwindigkeit jeder Erzeugungsquelle ist, die mit einem Drehmoment verknüpft ist.

**6.** Erzeugungssystem einer Vielzahl von Generatoren, mit:

einer Vielzahl von Generatoren (**10-1 bis 10-n**), die jeweils konfiguriert sind, eine Erfassungseinheit (**11**) bereitzustellen, die eine Geschwindigkeit einer Erzeugungsquelle und einen Ausgangsstrom jedes Generators (**10-1 bis 10-n**) erfasst;
einer Steuerungseinrichtung (**20**), die konfiguriert ist, ein Steuerungssignal zum Steuern eines Ausgangsstroms jedes der Generatoren (**10-1 bis 10-n**) derart zu erzeugen, dass eine Ausgangsleistung nahe an eine Referenzgesamtleistung gelangt, durch Einstellen der durch die Vielzahl von Generatoren (**10-1 bis 10-n**) zu erzeugenden Referenzgesamtleistung, Berechnen eines Strombefehlswerts unter Verwendung der Geschwindigkeiten der Erzeugungsquelle, die von jedem der Generatoren (**10-1 bis 10-n**) zu jedem Moment durch die Erfassungseinheit erfasst werden, und Verwenden des berechneten Strombefehlswerts, und
einer Stromsteuerungseinrichtung (**30**), die an einem Ausgangsanschluss jedes der Generatoren (**10-1 bis 10-n**) angebracht ist, die konfiguriert ist, ein Steuerungssignal aus der Steuerungseinrichtung (**20**) zu empfangen, und konfiguriert ist, eine Stromausgabe aus dem Generator (**10-1 bis 10-n**) zu steuern.

**7.** System nach Anspruch 6, wobei der Generator (**10-1 bis 10-n**) ein Windleistungsgenerator, ein Wellenleistungsgenerator oder ein Gezeitenleistungsgenerator ist.

**8.** System nach Anspruch 6, wobei die Steuerungseinrichtung (**20**) aufweist:

eine Betriebseinheit (**21**), die konfiguriert ist, den Strombefehlswert zu berechnen, und
eine Stromsignalerzeugungseinrichtung (**23**), die konfiguriert ist, ein Stromsignal zur Steuerung des Ausgangsstroms von jedem der Generatoren (**10-1 bis 10-n**) unter Verwendung des von der Betriebseinheit (**21**) berechneten Strombefehlswerts zu erzeugen.

**Revendications**

**1.** Procédé de régulation pour une pluralité de générateurs, comprenant :

l'établissement (S10) d'une puissance totale de référence à produire à partir d'une pluralité de générateurs (10-1 à 10-n) ;
**caractérisé par**
le calcul (S20) d'une valeur de commande de courant à l'aide de la puissance totale de référence et d'une vitesse d'une source de génération détectée à partir de chacun des générateurs (10-1 à 10-n) à tout moment ; et
l'ajustement (S30) d'un courant en sortie de chacun des générateurs (10-1 à 10-n) de façon à ce que cette sortie de puissance totale à partir de chaque générateur (10-1 à 10-n) soit proche de la puissance totale de référence à l'aide de la valeur de commande de courant calculée.

**2.** Procédé selon la revendication 1, dans lequel la puissance totale de référence est la puissance totale basée sur une moyenne quadratique (rms) de la vitesse de la source de génération dans une période prédéterminée.

**3.** Procédé selon la revendication 1 ou 2, dans lequel la valeur de commande de courant est définie par l'équation ci-dessous :

$$C = \frac{P_{total}}{v_1^2 + v_2^2 + O + v_n^2}$$

dans laquelle C est une valeur de commande de courant, chacun de $v_1$ à $v_n$ est une vitesse de la source de génération à tout moment, et $P_{total}$ est la puissance totale de référence.

4. Procédé selon la revendication 3, dans lequel la valeur de commande de courant est une constance proportionnelle d'une force ou d'un couple du générateur (10-1 à 10-n) et la vitesse de la source de génération.

5. Procédé selon la revendication 4, dans lequel l'ajustement du courant en sortie régule le courant à l'aide de la valeur de commande de courant par l'équation ci-dessous :

$$i = \frac{C}{K_f} v \qquad i = \frac{C}{K_t} w$$
ou

dans laquelle I est un courant en sortie, C est une valeur de commande de courant, $K_f$ est une constante proportionnelle d'une force et d'un courant, $K_t$ est une constante proportionnelle d'un couple et d'un courant, et v est une vitesse de chaque source de génération associée à une force, et W est une vitesse de chaque source de génération associée à un couple.

6. Système de génération d'une pluralité de générateurs, comprenant :

une pluralité de générateurs (10-1 à 10-n) configurés chacun pour fournir une unité de détection (11) qui détecte une vitesse d'une source de génération et un courant en sortie de chaque générateur (10-1 à 10-n) ;
un régulateur (20) configuré pour générer un signal de régulation pour réguler un courant en sortie de chacun des générateurs (10-1 à 10-n) de façon à ce que cette puissance en sortie soit proche de la puissance totale de référence, en établissant une puissance totale de référence à produire à partir de la pluralité de générateurs (10-1 à 10-n), en calculant une valeur de commande de courant à l'aide des vitesses de la source de génération détectées à partir de chacun des générateurs (10-1 à 10-n) à tout moment dans l'unité de détection, et à l'aide de la valeur de commande de courant calculée ; et
un régulateur de courant (30) installé sur une borne en sortie de chacun des générateurs (10-1 à 10-n), configuré pour recevoir un signal de régulation à partir du régulateur (20), et configuré pour réguler une sortie de courant à partir du générateur (10-1 à 10-n).

7. Système selon la revendication 6, dans lequel le générateur (10-1 à 10-n) est un générateur d'énergie éolienne, un générateur d'énergie houlomotrice ou un générateur d'énergie marémotrice.

8. Système selon la revendication 6, dans lequel le régulateur (20) comprend :

une unité d'exploitation (21) configurée pour calculer la valeur de commande de courant ; et
un générateur de signal de courant (23) configuré pour générer un signal de régulation pour réguler un courant en sortie de chacun des générateurs (10-1 à 10-n) à l'aide de la valeur de commande de courant calculée à partir de l'unité d'exploitation (21).

FIG 1.

100

FIG 2.

FIG 3.

FIG 4.

Phase Current

Phase Voltage

FIG 5.

Power

FIG 6.

Phase Current

Phase Voltage

FIG 7.

FIG 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2072813 A2
- WO 2008011522 A2
- US 20130221671 A1